# EUROPÄISCHE PATENTANMELDUNG

(11) **EP 3 040 829 A1**
(43) Veröffentlichungstag der Anmeldung: **06.07.2016**
(21) Anmeldenummer: 15150030.3
(22) Anmeldetag: 02.01.2015
(51) Int. Cl.: G06F 3/0481, B60K 35/00, B60K 37/06, G01C 21/36

(54) **Anwenderschnittstelle und Verfahren zum Betrieb einer Anwenderschnittstelle für ein Fortbewegungsmittel**

(71) Anmelder: Volkswagen AG, 38436 Wolfsburg (DE)
(72) Erfinder: Wild, Holger, 10179 Berlin (DE); Kötter, Nils, 38126 Braunschweig (DE)
(74) Vertreter: Hoefer & Partner Patentanwälte mbB

(57) **Zusammenfassung**

Es werden ein Fortbewegungsmittel, eine Anwenderschnittstelle sowie ein Verfahren zum Betrieb einer Anwenderschnittstelle (1) für ein Fortbewegungsmittel vorgeschlagen. Das Verfahren umfasst die Schritte:
- Definieren einer Bildschirmhintergrundgrafik (11) für eine Anzeigeeinrichtung (2) des Fortbewegungsmittels,
- automatisches Erkennen, dass ein vordefinierter Bereich (12) des Wallpapers (11) durch einen Vordergrundinhalt (13, 14, 15, 16) verdeckt würde, und im Ansprechen darauf
- automatisches Repositionieren des Wallpapers (11) gegenüber dem Vordergrundinhalt (13, 14, 15, 16) zur Vermeidung einer Verdeckung des Bereiches (12) durch den Vordergrundinhalt (13, 14, 15, 16).

## Beschreibung

### Stand der Technik

Die vorliegende Erfindung betrifft ein Fortbewegungsmittel, eine Anwenderschnittstelle sowie ein Verfahren zum Betrieb einer Anwenderschnittstelle für ein Fortbewegungsmittel. Insbesondere betrifft die vorliegende Erfindung eine geeignete Verwendung mehrerer Lagen (Englisch "Layer") auf einer Anzeigeeinrichtung einer Anwenderschnittstelle.

Moderne Fortbewegungsmittel weisen häufig graphische Anwenderschnittstellen auf, auf welchen wahlfreie Inhalte dargestellt werden können. Dabei ist auch eine Personalisierung bzw. Individualisierung der graphischen Anwenderschnittstellen zunehmend von den Anwendern gewünscht. Beispielsweise stellt der Homescreen in zukünftigen Fahrzeugen denjenigen Bereich dar, welchen der Kunde sich nach seinen eigenen Wünschen mit Hintergrundbildern (selbst erstellte Fotos o.Ä.) und Layouts (beispielsweise kachelbasiert) im Fahrzeug individualisieren kann. In den Hintergrundbildern (englisch "Wallpaper") sind naturgemäß einzelne Bereiche für den Anwender von höherem Interesse/Informationsgehalt bzw. von höherem ästhetischem Nutzen als andere Bereiche. Werden Vordergrundinhalte (z.B. Kacheln, deren Inhalt mitunter personalisierbar ist) angezeigt, verdecken die Vordergrundinhalte Anteile des Wallpapers. Beispielsweise für den Fall, dass ein Gesicht im Wallpaper enthalten ist, kann es wünschenswert sein, das Gesicht nach Möglichkeit nicht durch den Vordergrundinhalt zu verdecken. Im Stand der Technik werden mitunter Ansätze vorgeschlagen, gemäß welcher ein Anwender den Vordergrundinhalt wahlfrei positionieren kann. Hierzu führt der Anwender beispielsweise eine Wischgeste aus, mittels welcher er den Vordergrundinhalt an einen anderen Bereich auf dem Bildschirm bzw. an einen anderen Bereich des Wallpapers verschieben kann. Das manuelle Verschieben kann in Abhängigkeit dynamischer Vordergrundinhalte dazu führen, dass der Anwender häufige Verschiebeaktionen durchzuführen hat, welche insbesondere bei der Führung des Fortbewegungsmittels zu einer erheblichen Einschränkung der für die Fahrzeugführung erforderlichen Aufmerksamkeit führt. Es ist daher eine Aufgabe der vorliegenden Erfindung, den vorstehend identifizierten Missstand zu beheben.

### Offenbarung der Erfindung

Die vorstehend identifizierte Aufgabe wird erfindungsgemäß durch ein Verfahren zum Betrieb einer Anwenderschnittstelle für ein Fortbewegungsmittel vorgeschlagen. Die Anwenderschnittstelle umfasst eine Anzeigeeinrichtung, welche beispielsweise zur dauerhaften Einbringung bzw. informationstechnischen und mechanischen Einbindung in ein Fortbewegungsmittel vorgesehen sein kann. In einem ersten Schritt wird eine Bildschirmhintergrundgrafik (nachfolgend "Wallpaper" genannt) definiert. Ein Wallpaper kann beispielsweise als eine hinterste Ebene in einem Bildschirminhalt erscheinen und anteilig von dynamischen und Betriebszustands-abhängigen Inhalten (z.B. Kacheln, Fenster, Uhrzeit, Ordner, Dateien etc.) überlagert werden. In einem zweiten Schritt erfolgt ein automatisches Erkennen der Tatsache, dass ein vordefinierter Bereich des Wallpapers durch einen Vordergrundinhalt zukünftig verdeckt würde. Der vordefinierte Bereich kann beispielsweise ein werksseitig oder durch einen Anwender definierter Bereich eines erhöhten Interesses sein, welcher bevorzugt nicht durch den Vordergrundinhalt verdeckt werden soll. Im Rahmen der vorliegenden Erfindung sei selbstverständlich sowohl das gänzliche Vermeiden einer Verdeckung des vordefinierten Bereiches durch den Vordergrundinhalt als auch ein temporäres Verdecken und anschließendes automatisches Auflösen der Verdeckung (beispielsweise durch Verschieben des Vordergrundinhaltes gegenüber dem Wallpaper oder anders herum) verstanden. Im Ansprechen auf das automatische Erkennen werden das Wallpaper und der Vordergrundinhalt automatisch relativ zueinander repositioniert, um die Verdeckung des Bereiches durch den Vordergrundinhalt zu vermeiden. Auf diese Weise bleibt der vordefinierte Bereich für den Anwender sichtbar, während der Vordergrundinhalt nach dem Stand der Technik den Bereich verdecken und somit ästhetische oder informationstechnische Einbußen bedeuten würde.

Die Unteransprüche zeigen bevorzugte Weiterbildungen der Erfindung.

Das Wallpaper kann im Rahmen der vorliegenden Erfindung selbständig einen dynamischen Inhalt aufweisen. Mit anderen Worten weist das Wallpaper die Eigenschaft auf, dass sich sein optischer Inhalt über der Zeit automatisch verändert. Beispielsweise können unterschiedliche Bilder nach Art einer Diashow (auch "Slide Show") enthalten sein, welche aufeinanderfolgend (z.B. nach Ablauf einer vordefinierten jeweiligen Anzeigedauer) angezeigt werden. Alternativ oder zusätzlich können jedoch auch bewegte Inhalte in dem Wallpaper enthalten sein. Beispielsweise kann das Wallpaper als Navigationskarte ausgestaltet sein, welche sich in Abhängigkeit einer Bewegung des Fortbewegungsmittels oder im Ansprechen auf eine Zoom-Interaktion ändert. Sofern eine aktuelle Position des Fortbewegungsmittels in der Karte verzeichnet ist, kann die aktuelle Position (auch "Cursor") als vordefinierter Bereich im Rahmen der vorliegenden Erfindung vordefiniert sein. Auf diese Weise wird verhindert, dass die aktuelle Position und gegebenenfalls seine nähere Umgebung durch Vordergrundinhalte verdeckt werden, was die Verwendbarkeit des derartigen Wallpapers zur Routenführung verbessert

Eine weitere Möglichkeit zur Nutzung dynamischer Wallpaper kann eine Veranschaulichung von Fahrzeugbetriebsparametern sein. Beispielsweise kann eine Lastverteilung, ein Energiefluss (z.B. zwischen einer Traktionsbatterie und einer elektrischen Maschine bzw. den angetriebenen Rädern) durch eine Grafik veranschaulicht werden. In einer solchen Grafik können beispielsweise Energieflüsse und/oder Kraftflüsse nach Art eines Fluidflusses visualisiert werden. Alternativ oder zusätzlich können Zahlenwerte bezüglich einer aktuellen Leistung, bezüglich einer aktuellen Kraft und/oder bezüglich eines aktuellen Drehmomentes o.Ä. an entsprechenden Komponenten und insbesondere an den Rädern des Fortbewegungsmittels dargestellt werden. Die Integration solcher Inhalte in das Wallpaper erübrigt eine Darstellung mehrerer Fenster eines Vordergrundinhaltes nebeneinander, was die optische Erscheinung einer Bildschirmansicht beruhigen und ästhetisch vorteilhaft gestalten kann. Außerdem kann ein Gewöhnungseffekt des Anwenders bezüglich der Wallpaper-Inhalte dazu führen, dass der Anwender diese Inhalte leichter, schneller und mit weniger kognitivem Aufwand auffinden kann. Die vorgenannten Aspekte dynamischer Inhalte für Wallpaper und insbesondere die Verwendung einer Navigationskarte als Wallpaper können einzeln oder in Kombination miteinander auch von der Repositionierung unabhängige Erfindungen darstellen, für welche Schutz begehrt werden kann.

Das Repositionieren kann eine Anpassung eines Ausschnittes des Wallpapers umfassen. Beispielsweise kann ein anderer Ausschnitt einer anzuzeigenden Grafikdatei auf der verfügbaren Bildschirmfläche angezeigt werden. Entsprechend kann bei einer Verwendung eines Kartenmaterials ein bislang dargestellter Ausschnitt der Karte verschoben werden.

Insbesondere kann eine aktuelle Position des Fortbewegungsmittels in dem Kartenmaterial an eine andere Position auf dem Bildschirm verschoben werden, an welcher er nicht von einem Vordergrundinhalt, welchen es zusätzlich anzuzeigen gilt, verdeckt wird. Da üblicherweise die aktuelle Position des Fortbewegungsmittels in der Kartenmitte angezeigt wird, kann dies bedeuten, dass die aktuelle Position des Fortbewegungsmittels in einen Randbereich bzw. an eine exzentrische Position des Bildschirms verschoben wird.

Alternativ oder zusätzlich kann das Repositionieren (im Rahmen der vorliegenden Erfindung als "modifizierte relative Positionierung des Vordergrundinhaltes gegenüber dem Wallpaper" zu verstehen) eine Anpassung des Vordergrundinhaltes umfassen. Beispielsweise kann die Größe einer im Vordergrund des aktuellen Bildschirms angezeigten Kachel verändert werden und/oder eine Position der Kachel gegenüber einer unabhängig vom Wallpaper bzw. dem vordefinierten Bereich vorgesehenen Position angezeigt werden. Selbstverständlich kann auch ein erneutes Repositionieren vorgesehen sein, falls der vordefinierte Bereich oder der Vordergrundinhalt im Verlaufe der Zeit seine Größe und/oder Position auf dem Bildschirm ändern sollte, wie dies beispielsweise für die Fahrzeugposition im Verlaufe einer Fahrt bei feststehendem Kartenausschnitt der Fall ist.

Selbstverständlich können auch mehrere vordefinierte Bereiche auf dem Wallpaper zur erfindungsgemäßen Vermeidung einer Verdeckung durch einen Vordergrundinhalt vordefiniert sein bzw. vom Anwender vordefiniert werden.

Mögliche Interessensbereiche im Wallpaper sind beispielsweise eine Ist-Position und/oder eine Start-Position und/oder eine Ziel-Position und/oder eine Position eines nächsten anstehenden Manövers einer Routenführung. Andere Möglichkeiten für vordefinierte Bereiche sind Animationen zur Veranschaulichung von Betriebszuständen des Fortbewegungsmittels und ästhetisch relevante Bereiche im Wallpaper (z.B. das Gesicht einer abgelichteten Position).

Der vordefinierte Bereich kann beispielsweise bereits durch die Routenführung in Verbindung mit dem verwendeten Kartenausschnitt (Zoom-Faktor) automatisch vordefiniert werden bzw. in der Software des Auslieferungszustandes vordefiniert sein. Alternativ oder zusätzlich kann der vordefinierte Bereich durch einen Anwender festgelegt werden. Hierzu kann der Anwender beispielsweise in einem Wallpaper einen Bereich definieren, indem er diesen mit dem Finger umkreist, einen Rahmen über den Bereich zieht o.Ä. Sofern die enthaltenen Inhalte informationstechnisch bereits aufbereitet sind, kann der Anwender den Bereich auch aus einer Liste auswählen. Nach dem Definieren eines Wall Papers kann der Anwender auch zur Definition des Bereiches automatisch aufgefordert werden.

Der Vordergrundinhalt kann eine Kachel umfassen, welche von einem Anwender thematisch konfigurierbar ist. Beispielsweise kann der Anwender einen Themenbereich auswählen, bezüglich dessen Informationen und Schaltflächen in der Kachel angezeigt werden. Eine solche Konfiguration kann beispielsweise über ein Konfigurationsmenü vorgenommen werden.

Gemäß einem zweiten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor einer Anwenderschnittstelle in die Lage versetzen, die Schritte eines Verfahrens gemäß dem erstgenannten Erfindungsaspekt durchzuführen. Das Computerprogrammprodukt kann als CD, DVD, Blueray Disk, Flash-Speicher, Festplatte, RAM/ROM, Cache etc. ausgestaltet sein.

Gemäß einem dritten Aspekt der vorliegenden Erfindung wird eine Signalfolge, repräsentierend Informationen, vorgeschlagen, welche einen programmierbaren Prozessor einer Anwenderschnittstelle in die Lage versetzen, Schritte eines Verfahrens gemäß dem erstgenannten Erfindungsaspekt durchzuführen. Auf diese Weise wird auch die informationstechnische Bereitstellung der Informationen für den Fall unter Schutz gestellt, dass sich die hierzu erforderlichen Speichermittel außerhalb des Geltungsbereiches der beigefügten Ansprüche finden.

Gemäß einem vierten Aspekt der vorliegenden Erfindung wird eine Anwenderschnittstelle für ein Fortbewegungsmittel vorgeschlagen, welche eine Anzeigeeinrichtung (z.B. ein Bildschirm, welcher beispielsweise in das Armaturenbrett des Fortbewegungsmittel eingelassen ist), eine Erfassungseinrichtung zur Erfassung von Anwendergesten (z.B. eine berührungsempfindliche Oberfläche) und eine Auswerteeinheit (z.B. umfassend einen programmierbaren Prozessor) aufweist. Die Anzeigeeinrichtung ist eingerichtet, eine Bildschirmhintergrundgrafik ("Wallpaper") anzuzeigen. Die Auswerteeinheit ist eingerichtet, zu erkennen, dass ein vordefinierter Bereich des Wallpapers aufgrund eines erkannten Ereignisses durch einen Vordergrundinhalt verdeckt würde. Das Verdecken kann auch erst nach Eintritt erkannt und erfindungsgemäß behoben werden, indem das Wallpaper gegenüber dem Vordergrundinhalt zur Vermeidung einer Verdeckung des Bereiches automatisch repositioniert wird. Mit anderen Worten wird eine relative Anordnung zwischen dem Vordergrundinhalt und dem Wallpaper vorgenommen, wobei eine automatische Verschiebung und/oder eine Größenänderung des Vordergrundinhaltes und/oder des Wallpaper erfolgt bzw. erfolgen. Im Ergebnis bleibt der vordefinierte Bereich des Wallpapers trotz einer (fortwährenden) Anzeige des Vordergrundinhaltes sichtbar. Gemäß einem fünften Aspekt der vorliegenden Erfindung wird ein Fortbewegungsmittel (z.B. ein Pkw, ein Transporter, ein Lkw, ein Motorrad, ein Luft- und/oder Wasserfahrzeug vorgeschlagen), welches eine Anwenderschnittstelle gemäß dem viertgenannten Erfindungsaspekt aufweist. Die Komponenten der Anwenderschnittstelle können anteilig oder vollständig dauerhaft mechanisch und/oder informationstechnisch in das Fortbewegungsmittel integriert sein. Beispielsweise kann die Anzeigeeinrichtung als Kombiinstrument und/oder als zentrales Informationsdisplay (CID) vorgesehen sein. Die Merkmale, Merkmalskombinationen und die sich aus diesen ergebenden Vorteile entsprechen dem in Verbindung mit dem erfindungsgemäßen Verfahren Ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Übersicht über Komponenten eines Ausführungsbeispiels eines erfindungsgemäßen Fortbewegungsmittels mit einem Ausführungsbeispiel einer erfindungsgemäßen Anwenderschnittstelle;
- Figur 2: eine Bildschirmansicht (Englisch "Screenshot") eines Ausführungsbeispiels einer erfindungsgemäßen Anwenderschnittstelle, in welchem ein Auswahlmenü zur Definition eines Wallpapers dargestellt ist;
- Figur 3: eine Bildschirmansicht eines Ausführungsbeispiels einer erfindungsgemäßen Anwenderschnittstelle mit einem dynamischen Wallpaper nach Art einer Karte zur Routenführung;

- Figur 4: eine Bildschirmansicht eines Ausführungsbeispiels einer erfindungsgemäßen Anwenderschnittstelle, in welchem ein vordefinierter Bereich zur Vermeidung einer Verdeckung gegenüber Vordergrundinhalten repositioniert worden ist;
- Figur 5: eine Bildschirmansicht eines Ausführungsbeispiels einer erfindungsgemäßen Anwenderschnittstelle mit gegenüber Figur 4 modifiziertem Vordergrundinhalt;
- Figur 6: eine Bildschirmansicht eines Ausführungsbeispiels einer erfindungsgemäßen Anwenderschnittstelle mit einem dynamischen Wallpaper, welches eine aktuelle Lastverteilung auf angetriebene Räder des Fortbewegungsmittels veranschaulicht; und
- Figur 7: ein Flussdiagramm veranschaulichend Schritte eines Ausführungsbeispiels eines erfindungsgemäßen Verfahrens.

### Ausführungsformen der Erfindung

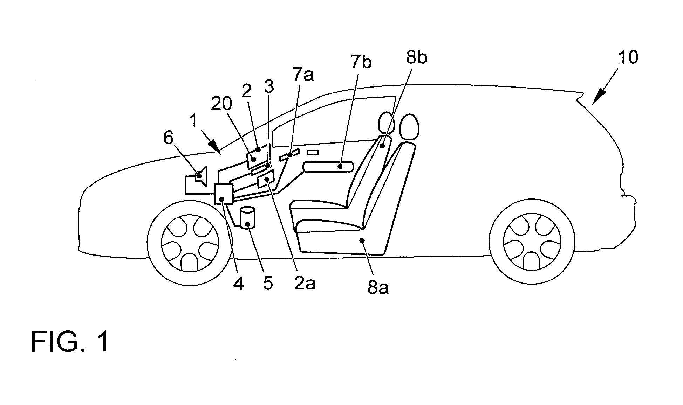

Figur 1 zeigt einen Pkw 10 als Fortbewegungsmittel, in welchem ein Ausführungsbeispiel einer erfindungsgemäßen Anwenderschnittstelle 1 verbaut ist. Ein Bildschirm 2 ist als Anzeigeeinrichtung vorgesehen und mit einer berührungsempfindlichen Oberfläche 20 als Bestandteil einer Erfassungseinrichtung ausgestattet. Unterhalb des Bildschirms 2 ist eine Infrarot-LED-Leiste 3 als weiterer Bestandteil der Erfassungseinrichtung vorgesehen und eingerichtet, frei im Raum erfolgte Anwendergesten (3D-Gesten) zu erfassen und in elektrische Signale zu wandeln. Unterhalb der Infrarot-LED-Leiste 3 ist ein weiterer (kleinerer) Bildschirm 2a vorgesehen, über welchen Heiz-/Klimaumfänge angezeigt und bedient werden können. Ein Datenspeicher 5 ist vorgesehen, Referenzen für Anwendergesten sowie Instruktionen zur Ausführung eines erfindungsgemäßen Verfahrens bereitzuhalten und ist hierzu ebenso wie die vorgenannten Komponenten informationstechnisch mit einem elektronischen Steuergerät 4 als Auswerteeinheit verbunden. Das elektronische Steuergerät 4 kann über einen Lautsprecher 6 Hinweis- und Wamtöne ausgeben. Ebenso können Anwendergesten und erfindungsgemäße Repositioniervorgänge akustisch untermalt bzw. quittiert werden. Zwei Ambientelichtleisten 7a, 7b sind informationstechnisch mit dem elektronischen Steuergerät 4 verbunden, welches die ausgeschüttete Lichtfarbe und -intensität den Wünschen des Anwenders anpassen kann. Ein Fahrersitz 8a und ein Beifahrersitz 8b sind vorgesehen, den Anwender in Form eines Fahrers bzw. eines Beifahrers aufzunehmen.

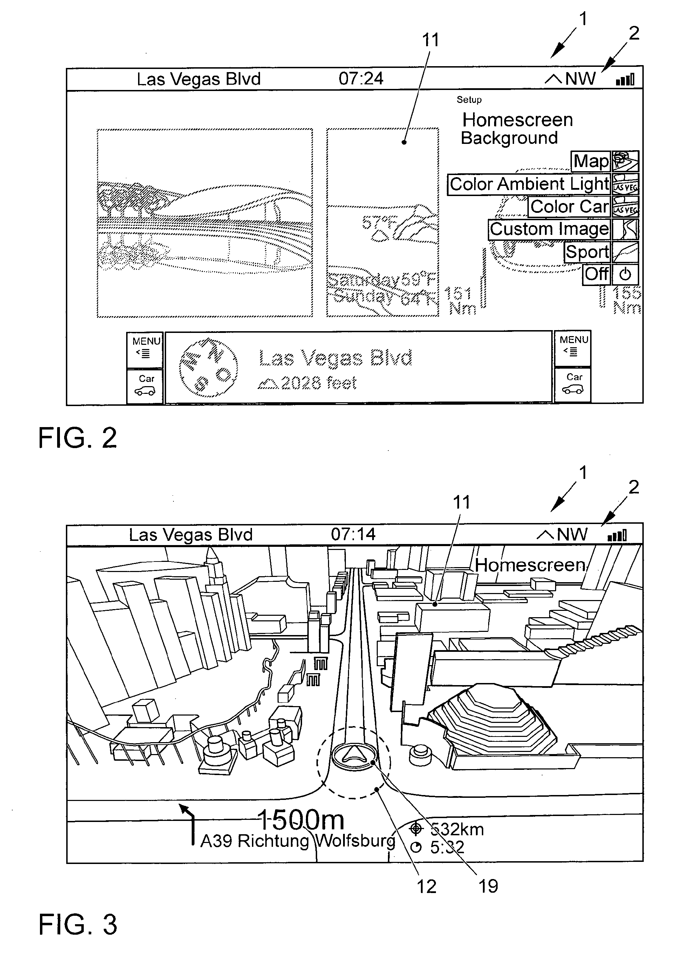

Figur 2 zeigt eine Bildschirmansicht eines Auswahlmenüs zur Definition eines Wallpapers 11 eines Home Screens, der auf einem Bildschirm 2 einer erfindungsgemäßen Anwenderschnittstelle 1 angezeigt wird. Zur Auswahl stehen (von oben nach unten) eine Straßenkarte, ein mit dem Ambientelicht harmonierendes Wallpaper, ein mit der Wagenfarbe harmonierendes Wallpaper, ein vom Anwender frei definierbares bzw. gespeichertes Bild, dynamische Anzeigen zu Kenngrößen aktueller Einstellungen des Fortbewegungsmittels und ein "Aus"-Zustand.

Figur 3 zeigt das Ergebnis einer Auswahl des in Figur 2 obersten Menüpunktes (Straßenkarte), im Ansprechen worauf eine dreidimensionale und perspektivische Ansicht der aktuellen Umgebung der Fahrzeugposition 19 als dynamisches Wallpaper 11 angezeigt wird. Hierbei ist die Fahrzeugposition 19 und ihre nähere Umgebung als vordefinierter Bereich 12 gekennzeichnet, der nach Möglichkeit nicht durch Vordergrundinhalte verdeckt werden soll, um anstehende Manöver und die nähere Umgebung des Fortbewegungsmittels auf dem Bildschirm 2 sichtbar darzustellen.

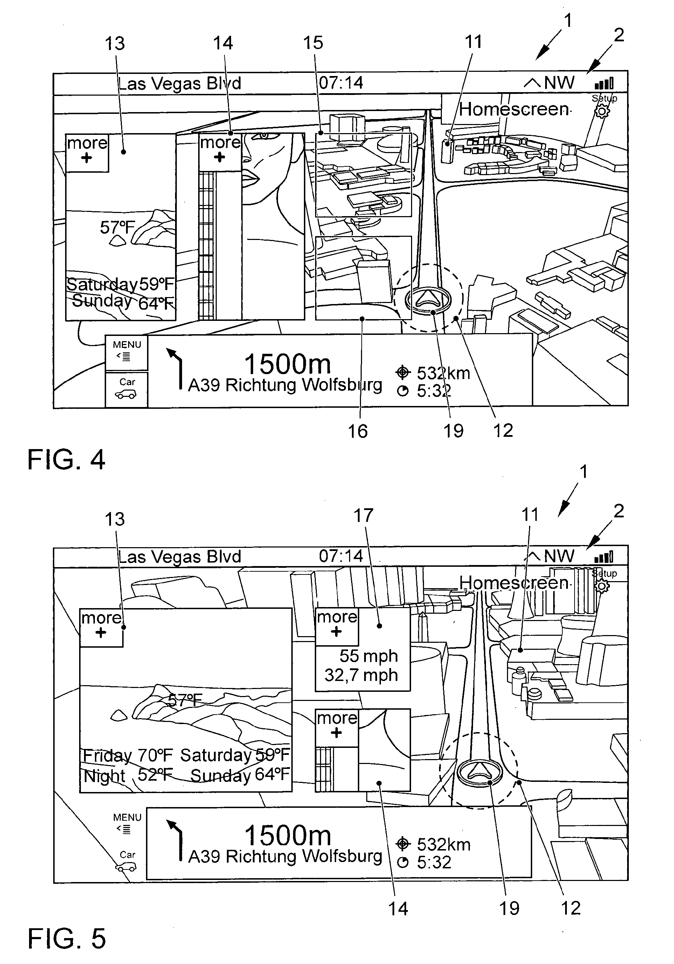

Figur 4 zeigt die in Figur 3 gezeigte Straßenkarte als dynamisches Wallpaper 11, in welcher Kacheln 13, 14, 15, 16 als Vordergrundinhalte unterschiedliche Informationen zum Wetter und zur aktuellen Musikwiedergabe anzeigen. Zwei Kacheln 15, 16 sind bezüglich ihrer Inhalte noch zu definieren. Um den vordefinierten Bereich 12 und die Fahrzeugposition 19 bestmöglich optisch darzustellen, ist der Kartenausschnitt gegenüber der Darstellung in Figur 3 derart verschoben worden, dass die Fahrzeugposition 19 und der vordefinierte Bereich 12 nun in der rechten Hälfte des Bildschirms 2 und somit rechts neben den Kacheln 13, 14, 15, 16 dargestellt werden. Die beiden bislang leeren Kacheln 15, 16 stören die Sichtbarkeit der Fahrzeugposition 19 indes nicht, da nach einem Wechseln der Bildschirmansicht in einen Anzeigemodus die Kacheln 15, 16 nicht mehr dargestellt werden und somit eine freie Sicht auf den vordefinierten Bereich 12 ermöglichen.

Figur 5 zeigt eine alternative Anordnung von Kacheln 13, 14, 17 als Vordergrundinhalte, welche für eine weitere Verschiebung der Fahrzeugposition 19 und des vordefinierten Bereiches 12 nach rechts auf den Bildschirm 2 gesorgt haben.

Figur 6 zeigt ein alternatives Ausführungsbeispiel eines dynamischen Wall Papers hinter zwei Kacheln 13, 18 als Vordergrundinhalte, wobei rechts der zwei Kacheln 13, 18 ein transparentes Fahrzeugmodell mit einem intransparent dargestellten Antriebsstrang als vordefinierter Bereich 12 dargestellt wird. Die aktuelle Lastverteilung auf die angetriebenen Räder wird durch Zahlenwerte für das aktuell übertragene Drehmoment angezeigt. Ändert sich die Lastverteilung, ändern sich auch die dargestellten Zahlenwerte. Um die optische Erfassbarkeit des Bereiches 12 stets sicherzustellen, wurden die Kacheln 13, 18 nach Erkennen des Anwenderwunsches zu deren Darstellung derart hinsichtlich ihrer Größe und Position angepasst, dass sie links neben dem vordefinierten Bereich 12 auf dem Bildschirm 2 dargestellt werden.

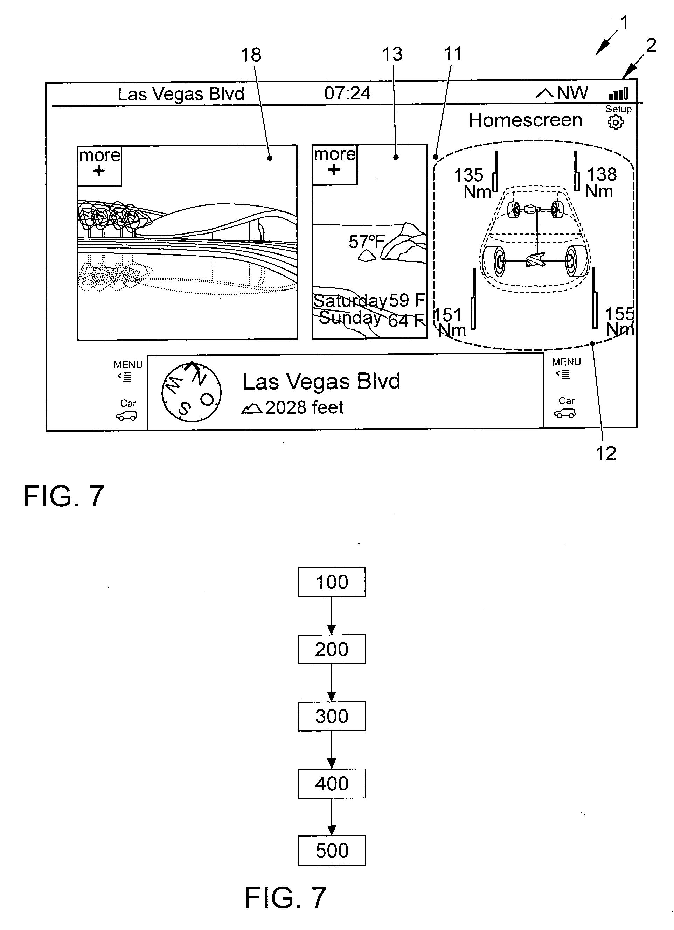

Figur 7 zeigt Schritte eines Ausführungsbeispiels eines erfindungsgemäßen Verfahrens zum Betrieb einer Anwenderschnittstelle für ein Fortbewegungsmittel. In Schritt 100 wird eine Bildschirmhintergrundgrafik für eine Anzeigeeinrichtung des Fortbewegungsmittels definiert. In Schritt 200 wird der Anwender gebeten, einen Bereich eines erhöhten Interesses innerhalb des Wallpapers zu definieren. Der Anwender kann hierzu ein Fenster "aufziehen", einen Bereich des Wallpapers mit dem Finger auf dem Bildschirm umkreisen oder Elemente aus einer Liste auswählen, welche zu Bereichen innerhalb des Wall Papers korrespondieren. Im Ansprechen auf eine entsprechende Anwendereingabe wird in Schritt 300 der Bereich in dem Wallpaper vordefiniert. Mit anderen Worten wird informationstechnisch ein Bildbereich festgelegt, dessen fortwährende Sichtbarkeit nach Möglichkeit und unter Abwägung vordefinierter Prioritäten zwischen dem Vordergrundinhalt und dem Wallpaper sicherzustellen ist. In Schritt 400 wird automatisch erkannt, dass der vordefinierte Bereich des Wallpapers durch einen Vordergrundinhalt, den es nachfolgend darzustellen gilt, zukünftig verdeckt würde. Im Ansprechen darauf wird in Schritt 500 das Wallpaper gegenüber dem Vordergrundinhalt automatisch zur Vermeidung einer Verdeckung des Bereiches durch den Vordergrundinhalt repositioniert. Mit anderen Worten wird eine relative Anordnung zwischen dem Wallpaper und dem Vordergrundinhalt geschaffen, durch welche sichergestellt wird, dass der vordefinierte Bereich nicht durch den darzustellenden Vordergrundinhalt verdeckt wird.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2, 2a: Bildschirm
- 3: Infrarot-LED-Leiste
- 4: Elektronisches Steuergerät
- 5: Datenspeicher
- 6: Lautsprecher
- 7a, 7b: Ambientelichtleiste
- 8a: Fahrersitz
- 8b: Beifahrersitz
- 10: Pkw
- 11: Wallpaper
- 12: vordefinierter Bereich erhöhten Interesses
- 13, 14, 15, 16, 17, 18: Kacheln
- 19: Cursor/Fahrzeugposition
- 20: berührungsempfindliche Oberfläche
- 100 bis 500: Verfahrensschritte

## Patentansprüche

1. Verfahren zum Betrieb einer Anwenderschnittstelle (1) für ein Fortbewegungsmittel (10) umfassend die Schritte:
- Definieren (100) einer Bildschirmhintergrundgrafik (11), nachfolgend "Wallpaper (11)" genannt, für eine Anzeigeeinrichtung (2) des Fortbewegungsmittels (10),
- automatisches Erkennen (400), dass ein vordefinierter Bereich (12) des Wallpapers (11) durch einen Vordergrundinhait (13,14,15, 16, 17, 18) verdeckt würde, und im Ansprechen darauf
- automatisches Repositionieren (500) des Wallpapers (11) gegenüber dem Vordergrundinhalt (13, 14, 15, 16, 17, 18) zur Vermeidung einer Verdeckung des Bereiches (12) durch den Vordergrundinhalt (13, 14, 15, 16, 17, 18).

2. Verfahren nach Anspruch 1, wobei das Wallpaper (11) einen dynamischen Inhalt, insbesondere mit bewegten Inhalten aufweist.

3. Verfahren nach Anspruch 1 oder 2, wobei das Wallpaper (11)
- eine Karte einer Routenführung und/oder
- eine Veranschaulichung von Fahrzeugbetriebsparametern, insbesondere einer Lastverteilung, und/oder
- eine von einem Anwender gewählte, insbesondere persönlich gespeicherte, Graphik umfasst.

4. Verfahren nach einem der vorstehenden Ansprüche, wobei das Repositionieren eine Anpassung eines angezeigten Ausschnittes des Wallpapers (11) umfasst.

5. Verfahren nach einem der vorstehenden Ansprüche, wobei das Repositionieren eine Anpassung des Vordergrundinhaltes (13, 14, 15, 16, 17, 18) umfasst.

6. Verfahren nach einem der vorstehenden Ansprüche, wobei der vordefinierte Bereich
- ein Element einer Routenführung und/oder
- ein Gesicht einer abgelichteten Person umfasst.

7. Verfahren nach einem der vorstehenden Ansprüche, weiter umfassend den Schritt
- Vordefinieren (300) des Bereiches (12) in dem Wallpaper (11).

8. Verfahren nach einem der vorstehenden Ansprüche, weiter umfassend die Schritte
- Auswählen eines Wallpapers (11) durch einen Anwender, und im Ansprechen darauf
- Automatisches Abfragen (200) einer Definition des Bereiches (12) von dem Anwender.

9. Verfahren nach einem der vorstehenden Ansprüche, wobei der Vordergrundinhalt (13, 14, 15, 16, 17, 18) eine Kachel umfasst, wobei insbesondere ein thematischer Inhalt durch einen Anwender konfigurierbar ist.

10. Verfahren nach einem der vorstehenden Ansprüche, wobei sich die Größe und/oder Position des Vordergrundinhaltes (13, 14, 15, 16, 17, 18) über der Zeit automatisch ändert bzw. ändern.

11. Anwenderschnittstelle für ein Fortbewegungsmittel (10) umfassend:
- eine Anzeigeeinrichtung (2),
- eine Erfassungseinrichtung (20) zur Erfassung von Anwendergesten, und
- eine Auswerteeinheit (4), wobei
- die Anzeigeeinrichtung (2) eingerichtet ist,
- eine Bildschirmhintergrundgrafik (11), nachfolgend "Wallpaper (11)" genannt, anzuzeigen, wobei
- die Auswerteeinheit (4) eingerichtet ist
- zu erkennen, dass ein vordefinierter Bereich (12) des Wallpapers (11) durch einen Vordergrundinhalt (13, 14, 15, 16, 17, 18) verdeckt würde, und im Ansprechen darauf
- das Wallpaper (11) gegenüber dem Vordergrundinhalt (13, 14, 15, 16, 17, 18) zur Vermeidung einer Verdeckung des Bereiches (12) durch den Vordergrundinhalt (13, 14, 15, 16, 17, 18) automatisch zu repositionieren.

12. Anwenderschnittstelle nach Anspruch 11, welche eingerichtet ist, ein Verfahren nach einem der vorstehenden Ansprüche 1 bis 10 auszuführen.

13. Computerprogrammprodukt umfassend Instruktionen, welche, wenn Sie auf einer Auswerteeinheit (4) einer Anwenderschnittstelle (1) nach einem der Ansprüche 11 oder 12 ausgeführt werden, die Auswerteeinheit (4) veranlassen, die Schritte eines Verfahrens nach einem der Ansprüche 1 bis 10 durchzuführen.

14. Signalfolge repräsentierend Instruktionen, welche, wenn Sie auf einer Auswerteeinheit (4) einer Anwenderschnittstelle (1) nach einem der Ansprüche 11 oder 12 ausgeführt werden, die Auswerteeinheit (4) veranlassen, die Schritte eines Verfahrens nach einem der Ansprüche 1 bis 10 durchzuführen.

15. Fortbewegungsmittel umfassend eine Anwenderschnittstelle (1) nach einem der Ansprüche 13 oder 14.
